# EUROPEAN PATENT APPLICATION

(11) **EP 2 922 012 A1**
(43) Date of publication of application: **23.09.2015**
(21) Application number: 14461515.0
(22) Date of filing: 21.03.2014
(51) Int. Cl.: G06Q 40/00

(54) **A computer-implemented method and system for operating a database for handling multilateral financial compensations**

(71) Applicant: Kosatka-Pioro, Aleksandra, 95-083 Lutomiersk (PL)
(72) Inventor: Kosatka-Pioro, Aleksandra, 95-083 Lutomiersk (PL); Pioro, Krzysztof, 95-083 Lutomiersk (PL)
(74) Representative: Pawlowski, Adam

(57) **Abstract**

A method for operating a database for handling multilateral financial compensations, the method being characterized in that it comprises the steps of: providing a legal entities database (307) for storing information regarding legal entities; providing a liabilities database (308) for storing information regarding liabilities of selected legal entities of the legal entities database (307) wherein a record of the liabilities database comprises a first contractor identifier and a second contractor identifier and information regarding amount of the liability; selecting (501) a first liability record, from the liabilities database (308); finding (502) all liabilities records where the second contractor identifier of the first liability equals the first contractor identifier of a second liability and forming a first set of liabilities; finding (503) all liabilities records where the second contractor identifier of each liability from the first set of liabilities equals the first contractor identifier of the first liability and forming a second set of liabilities; finding (505) minimum amounts for all sets of liabilities wherein a set comprises the first liability and a liability from the first set of liabilities and a liability from the second set of liabilities; providing (506) at least one compensation proposal from all found compensations; obtaining consent of all parties concerned by the compensation proposal; and executing (510) generation of documents of the compensation.

## Description

### TECHNICAL FIELD

The present invention relates to a method and system for operating a database for handling multilateral financial compensations, in particular at least trilateral compensations.

### BACKGROUND

When two persons are equally indebted to each other, they may agree to a compensation between them, which extinguishes both payables. Compensation is, therefore, a reciprocal liberation between two persons who are creditors and debtors to each other, the liberation taking place instead of payment, and preventing a circuity. Such compensations are detectable by the state of the art accounting systems - for example, when such system detects that a given party is simultaneously a debtor and a creditor, it can suggest a compensation.

Accounting systems typically store information about accounts payables and accounts receivables. The receivables define money due to one party by other parties, while the payables define money that one party is due to other parties.

In practice, financial compensations between two parties occur relatively rarely. They are more frequent, for large parties, which cooperate with thousands of customers, some of which can be also such large parties, when a compensation could be arranged via a plurality of parties, e.g. when party A owes to party B, party B owes to party C and party C owes to party A. If a large number of parties are involved, detection of such multilateral compensation possibilities can be a complicated and time-consuming process.

It would be advantageous to provide a database system configured to efficiently detect and process possibilities of multilateral financial compensations.

### SUMMARY

The object of the invention is a method for operating a database for handling multilateral financial compensations, the method being characterized in that it comprises the steps of: providing a legal entities database for storing information regarding legal entities; providing a liabilities database for storing information regarding liabilities of selected legal entities of the legal entities database wherein a record of the liabilities database comprises a first contractor identifier and a second contractor identifier and information regarding amount of the liability; selecting a first liability record, from the liabilities database; finding all liabilities records where the second contractor identifier of the first liability equals the first contractor identifier of a second liability and forming a first set of liabilities; finding all liabilities records where the second contractor identifier of each liability from the first set of liabilities equals the first contractor identifier of the first liability and forming a second set of liabilities; finding minimum amounts for all sets of liabilities wherein a set comprises the first liability and a liability from the first set of liabilities and a liability from the second set of liabilities; providing at least one compensation proposal from all found compensations; obtaining consent of all parties concerned by the compensation proposal; and executing generation of documents of the compensation.

Preferably, the multilateral financial compensation is executed among at least three parties.

Preferably, the method further comprises the steps of in case said consent of all parties involved is not available: proposing a debt assignment between two of the contractors; and generating documents of the assignment and providing the documents to the parties concerned.

Another object of the invention is a system for operating a database for handling multilateral financial compensations, the system comprising a data bus communicatively coupled to a memory and a controller, the system being characterized in that it further comprises: a legal entities database for storing information regarding legal entities; a liabilities database for storing information regarding liabilities of selected legal entities of the legal entities database; a documents generator configured to generate compensation or assignment documents; wherein the controller is configured to execute the steps of the method described above, by utilizing the resources provided by the liabilities database and the legal entities database and by the documents generator.

Another object of the invention is a computer program comprising program code means for performing all the steps of the computer-implemented method according to the invention when said program is run on a computer, as well as a computer readable medium storing computer-executable instructions performing all the steps of the computer-implemented method according to the invention when executed on a computer.

### BRIEF DESCRIPTION OF DRAWINGS

These and other objects presented herein are accomplished by providing a method and apparatus for handling multilateral financial compensations. Further details and features of the present invention, its nature and various advantages will become more apparent from the following detailed description of the preferred embodiments shown in a drawing, in which:
Fig. 1 presents a first embodiment of a method for handling multilateral financial compensations;
Fig. 2 present an example of a multilateral compensation;
Fig. 3 presents a system according to the present invention;
Fig. 4 shows exemplary records of different databases according to the present invention;
Fig. 5 shows a second embodiment of a method for handling multilateral financial compensations; and
Fig. 6 presents exemplary content of liabilities database.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DESCRIPTION OF EMBODIMENTS

A computer implemented system presented herein comprises a database of payables and receivables and means for handling a method for determining possibilities of multilateral compensations between parties registered in the system.

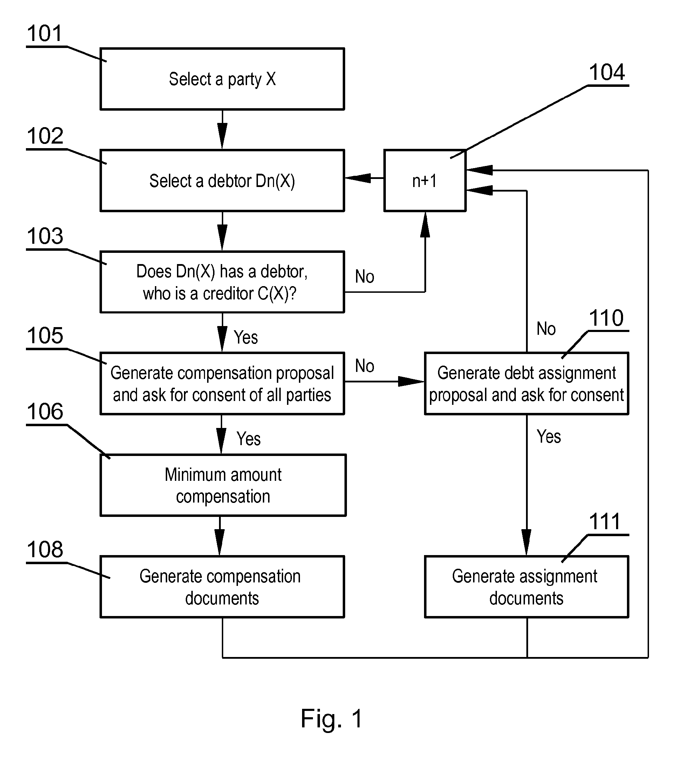

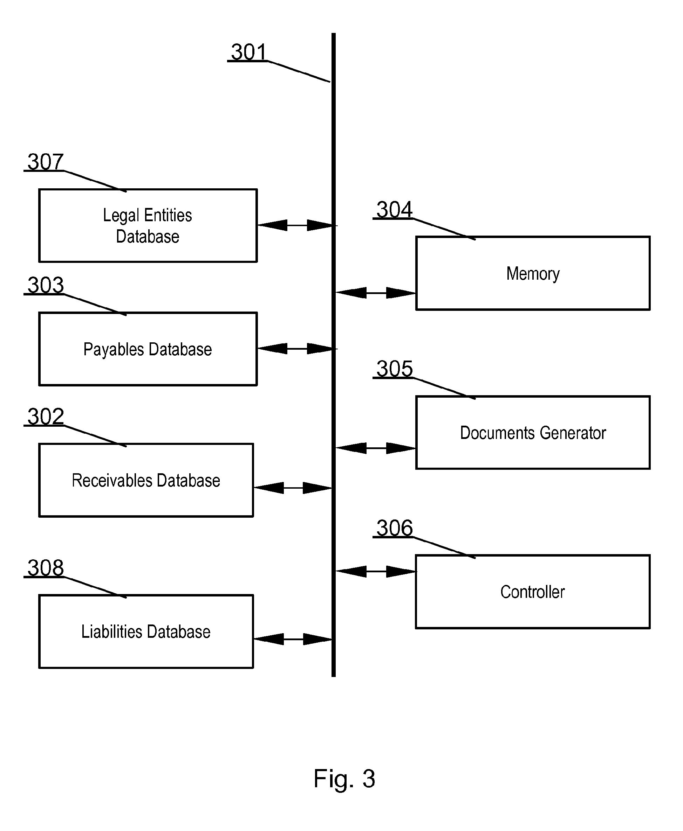

Fig. 1 presents a first embodiment of a method for handling a multilateral financial compensation. The process starts at step 101 by selecting a party X from a database of parties. Details of the system will be presented with reference to Fig. 3.

Subsequently, at step 102, a debtor Dn(X) of X is selected from a debtors database. All debtors from 1 to n of X are subsequently verified in steps 102-104. Next, at step 103, it is checked whether Dn(X) has a debtor, that is at the same time a creditor (C) of party X.

It is to be understood that a term of liability may be introduced that in a sense is both a receivable and a payable. A liability of A to B is a payable of A and a receivable of B.

In case Dn(X) does not have debtors who are creditors of X, at step 104 the procedure moves to next debtor Dn(X) until all n debtors of X are analyzed.

Otherwise, in step 105, the procedure suggests a compensation proposal for X, Dn(X) and C(X), which requires obtaining consent of all parties concerned. For example, an automatic message may be generated to all parties. The database of parties comprises contact details, for example e-mail addresses or postal addresses, to which debtor propositions can be transmitted via e-mail or post message. The procedure continues when consent of all parties is collected, for example all parties send back a signed form. Alternatively, the compensation proposal may comprise a link to an interactive system, wherein a party can electronically confirm the proposal, for example using safe cryptographic signatures.

Subsequently, at step 106, the parties may be presented with a minimum amount compensation. After that, at step 108, compensation documents are generated and provided to all parties concerned. The procedure continues then by selecting another debtor Dn(X) until all debtors are analyzed.

Alternatively, when not all parties agree to the compensation proposal (for example, when not all agreements are received within a predetermined time period), at step 110 the procedure generates a proposal of debt assignment of debt of C(X) to Dn(X) to party X, which is sent at least to Dn(X) and to X. When the parties agree, then in step 111 assignment documents are generated and sent to the parties concerned.

In case the parties do not agree to the assignment, the procedure continues by selecting another debtor Dn(X) until all debtors are analyzed.

When all debtors are analyzed, the analysis of party X1 is finished and the procedure may continue to analyze another party X2 until all parties are analyzed.

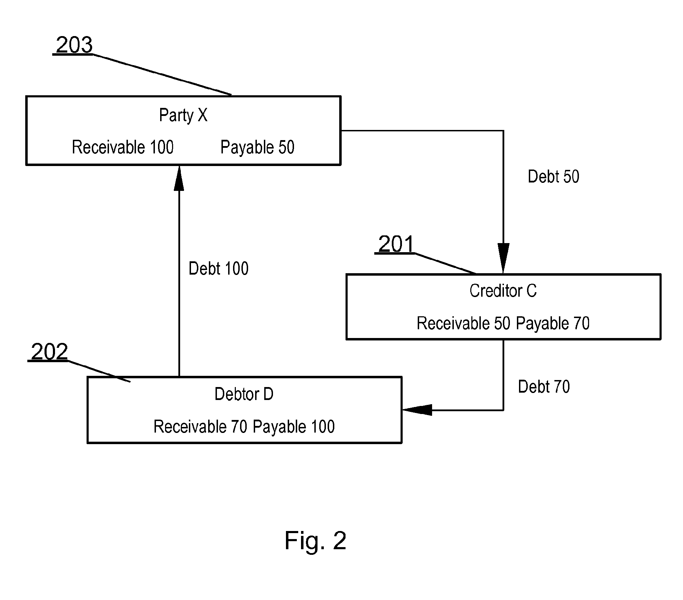

Fig. 2 presents an example of a multilateral compensation. In this case, party C 201 has receivables of 50 and payables of 70, meaning that party X 203 is to pay party C 50 while party C is to pay 70 to party D 202. Party D has therefore receivables of 70 from party C 201, and payables of 100 to party X 203. Therefore, party X 203 has 100 receivables from party D and 50 payables to party C 201.

In such a case, a trilateral compensation for the amount of 50 requires a consent of X, D and C. An assignment of liability between two selected parties (eg. D assigns its debt (account receivable) from C to X in an amount of 50 or 70-depending on the agreement) requires consent of the two parties executing the assignment.

After a trilateral compensation for the amount of 50:
- Party X has 50 receivables and 0 payables;
- Party C has 0 receivables and 20 payables; and
- Party D has 20 receivables and 50 payables.

Preferably, after verification of all trilateral compensation possibilities, the system will proceed to verifying compensation possibilities between four parties, then subsequently between five parties and so on. The number of combinations of parties increases geometrically with an increase of number of parties. For example, in case of a party having a 1000 debtors, there are 1000² options to verify at step 102 and 1000³ to verify at step 103.

Optionally, the process of searching for compensation possibilities may be extended with finding a party that is not present in the legal entities database. Such party may be found by analysis of payables and receivables. In case a given company is a debtor of a first company A and a creditor of a second company B or a creditor of the first company A and a debtor of the second company B, a compensation or debt assignment is possible.

For example, in order to facilitate a compensation between parties A and B that do not have mutual payables (only single sided), the method, according to the present invention, will find party C connected with party A and B (in case of A as a debtor and in case of B as a creditor) and thus propose:
1) introduction of C to the compensation system (the database of legal entities) and generation compensation documents;
2) assignment of receivables C from party A to party B (without party C involvement).

Optionally, the process of compensation possibilities finding of the system may be extended with creation and updating a liabilities database eg. A-> B, B-> C, C-> D, D-> A, based on the database of legal entities. Then the payables and receivables database are searched instead of the database of legal entities. In such approach the number of parties of compensations will increase only when the method finds all possible compensation of n-parties. Therefore, the method does not need to check all n-party combinations for the data (selected initially) of two parties but instead will just check all possible combinations of trilateral receivables in the database, then check all combinations of receivables between four parties etc. This will allow for the use of much lower utilization of computing resources.

As another option, the system may, based on the legal entities database suggest to a given party a purchase from a selected party in order to facilitate a multilateral compensation including information regarding offered goods and services.

Proposals for such a "closing" of a non-existent compensation can be automatically generated or based on a user's query. This solution also narrows the search options in the legal entities database / receivables-payables databases, saving computational resources.

For example, party A manufactures semitrailers and has a liability towards party B, which produces tires for trucks, which in turn buys components for its production from party C. Party A has a liability versus party B, party B has a liability versus party C. If the C party plans to purchase a semitrailer for transportation of its products, there may be found and suggested a purchase by the A party under a trilateral compensation A -> B -> C which will make it possible for party C to purchase the semitrailer as a non-cash transaction (for debt - receivables). It will be beneficial for party C, even if the offer of A will be more expensive than the competition offer (for example due to variable value of money in time, trade credit policy, or assessment of credibility of the contractor).

FIG. 3 presents a system according to the present invention. The system may be realized using dedicated components or custom made FPGA or ASIC circuits. The system comprises a data bus 301 communicatively coupled to a memory 304. The memory may for example store temporary processing data and also store computer programs executed by a controller 306.

Additionally, other components of the system according to the present invention are communicatively coupled to the system bus 301 so that they may be managed by the main controller 306.

The system comprises four kinds of databases: the legal entities database 307, the payables database 303, the receivables database 302 and the liabilities database 308, created based on data from the databases 307, 303 and 302. These databases store information defining participants of the compensation system as well as their debts (accounts receivable) and credit (accounts payable).

The liabilities database records are provided in the following manner. Each payable record, present in the payables database 303, and each receivable record, present in the receivables database 302, are suitably copied into the liabilities database 308 such that duplicates, arising from consideration as payable/receivable depending on a party, are removed. For example a payable record between companies A and B will also exist as a receivable record between companies B and A. In such case the liabilities database 308 will only comprise one record defining such payable-receivable dependency.

An additional component of the system according to the present invention is a documents generator 305 configured to generate compensation or assignment documents as defined at steps 108 and 111 of the method according to the present invention.

The controller 306 is configured to execute the steps of the method according to the present invention by utilizing the resources provided by the respective databases 307, 303, 302 and 308 and the documents generator 305.

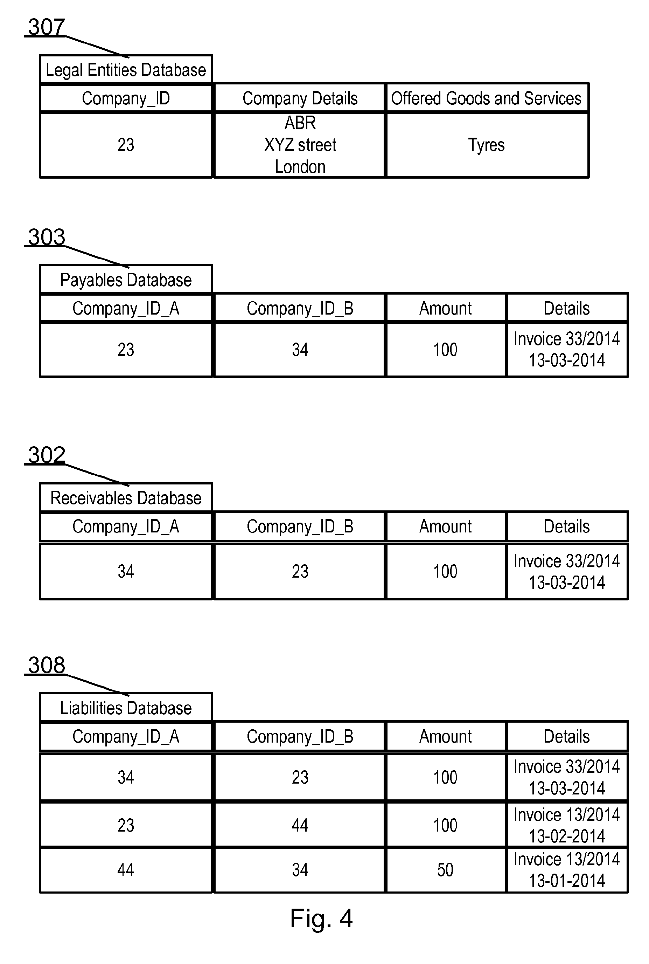

Fig. 4 shows exemplary records of different databases according to the present invention. As will be evident to those skilled in the art, such databases may comprise a suitable primary key and/or a foreign key in order to identify records and records references.

The legal entities database 307 holds records identifying companies being parties to the compensation system. Each company has its unique identifier Company_ID and detailed description and information followed by an optional definition of goods and services a given company offers.

The payables database 303 comprises an identification of a company which is to pay compensation (Company_ID_A) and an identification of a company which is to receive compensation (Company_ID_B). Additionally, an amount of the payable is given. Optionally there are is a supplemental information such as invoice identifier, payment due date etc.

The receivables database 302 comprises an identification of a company, which is to receive compensation (Company_ID_A) and an identification of a company which is to pay compensation (Company_ID_B). Additionally, an amount of the payable is given. Optionally there is also a supplemental information such as invoice identifier, payment due date etc.

The liabilities database 308 comprises an identification of a company, which is to receive compensation (Company_ID_A) and an identification of a company which is to pay compensation (Company_ID_B). Additionally, an amount of the payable is given. Optionally there is also a supplemental information such as invoice identifier, payment due date etc.

Each payable present in the payables database 303 and each receivable present in the receivables database 302 is listed in the liabilities database 308 such that duplicates, arising from consideration as payable/receivable depending on a party, are removed (or otherwise not stored).

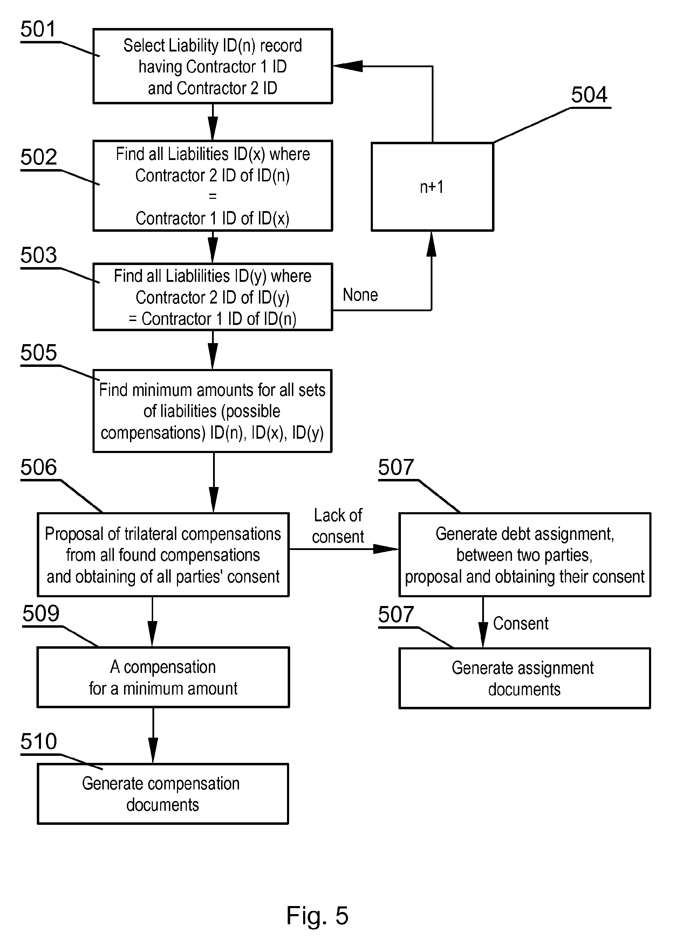

Fig. 5 shows a second embodiment of a method for handling multilateral financial compensations.

The procedure starts at step 501 from selecting a liability ID(n) record having Contractor 1 Identifier and Contractor 2 Identifier. Such records are present in the liabilities database 308 as already explained. Subsequently, at step 502, there are found all Liabilities ID(x) where Contractor 2 Identifier of the ID(n) equals Contractor 1 Identifier of another liability ID(x). These results are forming a first set of liabilities. Similarly, at step 503, there are found all liabilities ID(y) where Contractor 2 Identifier of ID(y) equals Contractor 1 Identifier of ID(n) liability. These results are forming a second set of liabilities.

In case the verification of step 503 does not return any results, the value of n is increased in step 504 (i.e. the procedure moves to a next record in the liabilities database 308). Otherwise, at step 505, there are found minimum amounts for all sets of liabilities (possible compensations) ID(n), ID(x), ID(y) in order to propose, at step 506, trilateral compensations created from all found compensations and obtain consent of all parties. Such set of liabilities comprises the first liability (step 501) and a liability from the first set of liabilities (step 502) and a liability from the second set of liabilities (step 503).

In case the consent cannot be obtained, at step 507, there is generated a debt assignment proposal, between two parties, and there is obtained their consent in order to generate the assignment documents at step 509.

Otherwise, when there is obtained a consent at step 506, a compensation is allowed for a minimum amount 509 and appropriate compensation documents are generated at step 510.

The procedure of Fig. 5 has the advantage over the procedure of Fig. 1 in that it eases the identification of companies related by means of liabilities in case of multilateral compensation identification.

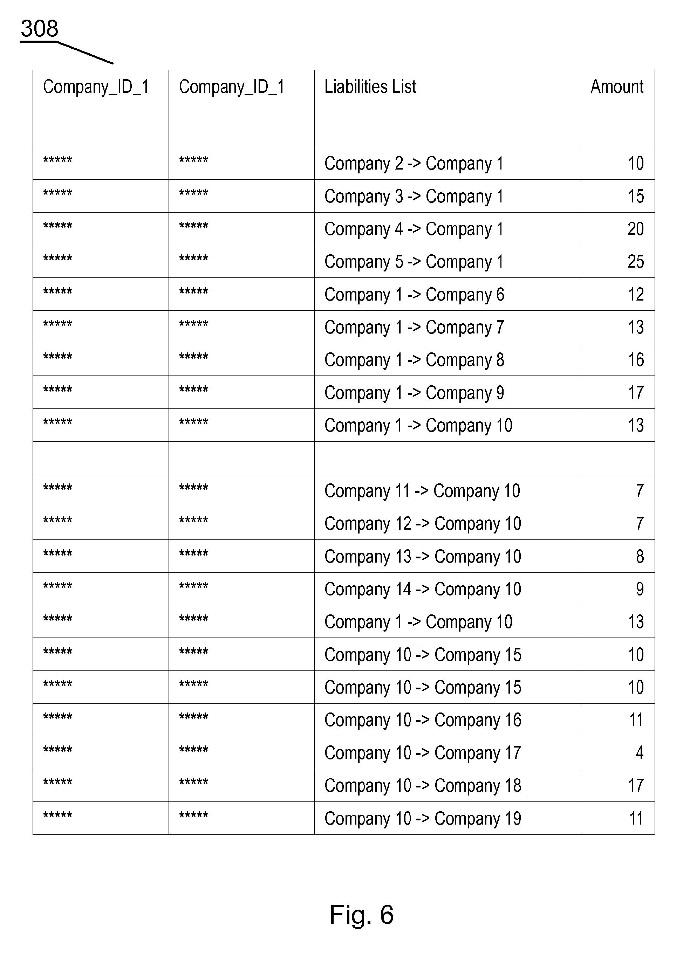

Fig. 6 presents exemplary content of liabilities database. The database comprises the following columns: identifier of the first company, identifier of the second company, information about relationship between the two identified companies and an amount of liability.

It can be easily recognized, by one skilled in the art, that the aforementioned method for operating a database for handling multilateral financial compensations may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a suitable processor.

These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for operating a database for handling multilateral financial compensations, the method being **characterized in that** it comprises the steps of:
- providing a legal entities database (307) for storing information regarding legal entities;
- providing a liabilities database (308) for storing information regarding liabilities of selected legal entities of the legal entities database (307) wherein a record of the liabilities database comprises a first contractor identifier and a second contractor identifier and information regarding amount of the liability;
- selecting (501) a first liability record, from the liabilities database (308);
- finding (502) all liabilities records where the second contractor identifier of the first liability equals the first contractor identifier of a second liability and forming a first set of liabilities;
- finding (503) all liabilities records where the second contractor identifier of each liability from the first set of liabilities equals the first contractor identifier of the first liability and forming a second set of liabilities;
- finding (505) minimum amounts for all sets of liabilities wherein a set comprises the first liability and a liability from the first set of liabilities and a liability from the second set of liabilities;
- providing (506) at least one compensation proposal from all found compensations;
- obtaining consent of all parties concerned by the compensation proposal; and
- executing (510) generation of documents of the compensation.

2. The method according to claim 1 **characterized in that** the multilateral financial compensation is executed among at least three parties.

3. The method according to claim 1 **characterized in that** the method further comprises the steps of in case said consent of all parties involved is not available:
- proposing (507) a debt assignment between two of the contractors; and
- generating documents of the assignment and providing the documents to the parties concerned.

4. A system for operating a database for handling multilateral financial compensations, the system comprising a data bus (301) communicatively coupled to a memory (304) and a controller (306), the system being **characterized in that** it further comprises:
- a legal entities database (307) for storing information regarding legal entities;
- a liabilities database (308) for storing information regarding liabilities of selected legal entities of the legal entities database (307);
- a documents generator (305) configured to generate compensation or assignment documents;
- wherein the controller (306) is configured to execute the steps of the method, according to claim 1, by utilizing the resources provided by the liabilities database (308) and the legal entities database (307) and by the documents generator (305).

5. A computer program comprising program code means for performing all the steps of the computer-implemented method according to any of claims 1-3 when said program is run on a computer.

6. A computer readable medium storing computer-executable instructions performing all the steps of the computer-implemented method according to any of claims 1-3 when executed on a computer.
